# EUROPÄISCHE PATENTSCHRIFT

(11) **EP 2 669 485 B1**
(45) Veröffentlichungstag und Bekanntmachung des Hinweises auf die Patenterteilung: **03.06.2015**
(21) Anmeldenummer: 13162438.9
(22) Anmeldetag: 05.04.2013
(51) Int. Cl.: F01N 13/10

(54) **Abgasleitung für eine Brennkraftmaschine**
Exhaust pipe for a combustion engine
Conduite de gaz d'échappement pour un moteur à combustion interne

(30) Priorität: 01.06.2012 DE 102012209288
(43) Veröffentlichungstag der Anmeldung: 04.12.2013
(73) Patentinhaber: MAN Diesel & Turbo SE, 86153 Augsburg (DE)
(72) Erfinder: Würr, Florian, 87534 Oberstaufen (DE); Siebert, Bernd, 86687 Altisheim (DE); Bachl, Christian, 86153 Augsburg (DE); Söngen, Matthias, 86156 Augsburg (DE)

(56) Entgegenhaltungen:
- DE-A1-102006 036 741
- DE-C2- 19 644 707
- GB-A- 1 554 540
- US-A1- 2013 000 287

## Beschreibung

Die Erfindung betrifft eine gemäß dem Oberbegriff des Anspruchs 1 ausgebildete Abgasleitung für eine Brennkraftmaschine.

Eine Abgasleitung der eingangsgenannten Art ist z.B. aus DE 196 44 707 C2 bekannt. Mit einer solchen außengekühlten Abgasleitung kann die Temperatur an der Außenfläche der Abgasleitung in den Bereich der Kühlmitteltemperatur der Brennkraftmaschine gesenkt werden, so dass insbesondere den Anforderungen für unbeaufsichtigten Betrieb Rechnung getragen werden kann.

Gemäß DE 196 44 707 C2 ist eine Verbindungsstelle eines ersten Leitungssegments der Abgasleitung mit einem dazu benachbarten zweiten Leitungssegment der Abgasleitung im Bereich eines äußeren Gehäuseabschnitts überlappend ausgeführt. Im Überlappungsbereich sind Dichtungen angeordnet, die verhindern sollen, dass bei einer Kühlmittelströmung durch eine in den Leitungssegmenten verlaufende Kühlmittelpassage hindurch Kühlmittelleckage auftritt.

Allerdings bergen diese Dichtungen Potential für einen z.B. verschleißbedingten Dichtungsausfall und damit für eine erhebliche Kühlmittelleckage.

Der Erfindung liegt die Aufgabe zugrunde, eine gemäß dem Oberbegriff des Anspruchs 1 ausgebildete Abgasleitung für eine Brennkraftmaschine bereitzustellen, so dass eine Kühlmittelleckage noch sicherer verhindert wird. Dies wird mit einer Abgasleitung gemäß Anspruch 1 erreicht. Weiterbildungen der Erfindung sind in den abhängigen Ansprüchen definiert.

Gemäß der Erfindung weist eine Abgasleitung für eine Brennkraftmaschine, die eine Mehrzahl von jeweils einen Abgasauslass aufweisenden Verbrennungszylindern hat, eine Mehrzahl von Leitungssegmenten auf, die jeweils mehrwandig ausgebildet sind, so dass sie jeweils eine Abgaspassage und eine die Abgaspassage umgebende Kühlmittelpassage definieren, wobei die Leitungssegmente jeweils einen Abgaseinlass aufweisen und längs zueinander dichtend aufgereiht sind, so dass die Abgaspassagen der jeweiligen Leitungssegmente miteinander verbunden und die jeweiligen Abgaseinlässe der Leitungssegmente jeweils zu einem der Abgasauslässe der Brennkraftmaschine ausgerichtet sind. Die erfindungsgemäße Abgasleitung zeichnet sich dadurch aus, dass jedes der Leitungssegmente einen zu einem Kühlsystem der Brennkraftmaschine hin offenen Kühlmitteleinlass und einen zum Kühlsystem hin offenen Kühlmittelauslass für seine Kühlmittelpassage aufweist und dass die Kühlmittelpassagen der jeweiligen Leitungssegmente voneinander getrennt sind, so dass jedes der Leitungssegmente seinen eigenen geschlossenen Kühlmittelkreislauf aufweist.

Dadurch, dass gemäß der Erfindung jedes der Leitungssegmente einen zum Kühlsystem hin offenen Kühlmitteleinlass und einen zum Kühlsystem hin offenen Kühlmittelauslass für seine Kühlmittelpassage aufweist und die Kühlmittelpassagen der jeweiligen Leitungssegmente voneinander getrennt sind, so dass jedes der Leitungssegmente seinen eigenen geschlossenen Kühlmittelkreislauf aufweist, sind eine Überführung des Kühlmittels von Leitungssegment zu Leitungssegment und eine entsprechende Abdichtung der Überführungsstellen nicht erforderlich. Damit können potentielle Dichtungsausfälle vermieden werden, wodurch eine mögliche Kühlmittelleckage noch sicherer verhindert wird.

Gemäß einer Ausführungsform der Erfindung sind der Kühlmitteleinlass und der Kühlmittelauslass von jedem der Leitungssegmente so ausgebildet, dass sie eine einzige Verbindungsstelle des jeweiligen Leitungssegments mit dem Kühlsystem der Brennkraftmaschine definieren.

Als jeweilige Verbindungsstellen bzw. Schnittstellen gemäß der Erfindung dienen bevorzugt jeweilige Verbindungselemente, welche integral an die jeweiligen Leitungssegmente angeformt oder als Einzelteile an diese anmontiert sein können. Demnach wird gemäß der Erfindung realisiert, dass Kühlmitteleinlass und Kühlmittelauslass eine einzige Verbindungsstelle des jeweiligen Leitungssegments mit dem Kühlsystem definieren, indem der Kühlmitteleinlass und der Kühlmittelauslass gemeinsam in ein einziges solches Verbindungselement integriert sind.

Auf diese Weise werden die Herstellung und die Montage der Leitungssegmente an der Brennkraftmaschine vereinfacht, da weniger Anschlüsse an den Leitungssegmenten ausgebildet und mit der Brennkraftmaschine verbunden werden müssen.

Gemäß einer weiteren Ausführungsform der Erfindung ist der Abgaseinlass von jedem der Leitungssegmente angeordnet an dessen Verbindungsstelle mit dem Kühlsystem der Brennkraftmaschine.

Diese Ausgestaltung der Erfindung befördert in vorteilhafter Weise eine weitere Vereinfachung von Herstellung und Montage der Leitungssegmente, da noch weniger Anschlüsse an den Leitungssegmenten ausgebildet und mit der Brennkraftmaschine verbunden werden müssen.

Bevorzugt dient die einzige Verbindungsstelle jedes Leitungssegments auch als mechanische Halterung und Befestigung des jeweiligen Leitungssegments an der Brennkraftmaschine.

Damit wird in vorteilhafter Weise sowohl die Befestigung als auch der Medienanschluss jedes Leitungssegments auf eine einzige Montageposition an diesem beschränkt, was die Vereinfachung von Herstellung und Montage der Leitungssegmente zusätzlich befördert.

Gemäß noch einer Ausführungsform der Erfindung weist jedes der Leitungssegmente einen radial davon vorstehenden mehrwandigen Verbindungsansatz als Verbindungsstelle bzw. Verbindungselement auf, wobei bei jedem der Leitungssegmente:
- die Abgaspassage eine Abgaseinlasspassage aufweist, die in dem Verbindungsansatz des jeweiligen Leitungssegments ausgebildet ist und die an einem Längsende dieser den Abgaseinlass der Abgaspassage des jeweiligen Leitungssegments definiert,
- die Kühlmittelpassage eine Kühlmitteleinlasspassage aufweist, die in dem Verbindungsansatz des jeweiligen Leitungssegments ausgebildet ist und die an einem Längsende dieser den Kühlmitteleinlass der Kühlmittelpassage des jeweiligen Leitungssegments definiert, und
- die Kühlmittelpassage eine Kühlmittelauslasspassage aufweist, die in dem Verbindungsansatz des jeweiligen Leitungssegments ausgebildet ist und die an einem Längsende dieser den Kühlmittelauslass der Kühlmittelpassage des jeweiligen Leitungssegments definiert.

Wie oben bereits erwähnt, werden mit dieser Ausgestaltung der Erfindung in vorteilhafter Weise alle Medienanschlüsse jedes Leitungssegments auf eine einzige Montageposition an diesem beschränkt, was durch die damit erzielte Reduzierung von an den jeweiligen Leitungssegmenten herzustellenden Anschlüssen eine Vereinfachung der Herstellung und der Montage der Leitungssegmente bewirkt.

Gemäß noch einer weiteren Ausführungsform der Erfindung weist der Verbindungsansatz jedes der Leitungssegmente ein freies Längsende auf, an dem ein Verbindungsflansch ausgebildet ist, der derart eingerichtet ist, dass er mit der Brennkraftmaschine, insbesondere mit einem Zylinderkopf dieser, verbindbar ist, wobei der Abgaseinlass, der Kühlmitteleinlass und der Kühlmittelauslass eines jeweiligen Leitungssegments über eine Abgaseinlassöffnung, eine Kühlmitteleinlassöffnung bzw. eine Kühlmittelauslassöffnung in den Verbindungsflansch münden, so dass der Abgaseinlass des jeweiligen Leitungssegments mit dem Abgasauslass eines dazu korrespondierenden Verbrennungszylinders der Brennkraftmaschine, der Kühlmitteleinlass des jeweiligen Leitungssegments mit einem dazu korrespondierenden Kühlmittelauslass des Kühlsystems der Brennkraftmaschine und der Kühlmittelauslass des jeweiligen Leitungssegments mit einem dazu korrespondierenden Kühlmitteleinlass des Kühlsystems der Brennkraftmaschine verbindbar sind.

Wie oben bereits erwähnt, werden mit dieser Ausgestaltung der Erfindung in vorteilhafter Weise sowohl die Befestigung als auch die Medienanschlüsse jedes Leitungssegments auf eine einzige Montageposition an diesem beschränkt, was durch die damit erzielte Reduzierung von an den jeweiligen Leitungssegmenten herzustellenden Anschlüssen und Befestigungen eine zusätzliche Vereinfachung der Herstellung und der Montage der Leitungssegmente bewirkt.

Gemäß einer Ausführungsform der Erfindung erstreckt sich die Abgaseinlasspassage zentral durch den Verbindungsansatz hindurch, wobei sich die Kühlmitteleinlasspassage und die Kühlmittelauslasspassage radial außerhalb der Abgaseinlasspassage und einander in Bezug auf die Abgaseinlasspassage diametral gegenüberliegend durch den Verbindungsansatz hindurch erstrecken. Durch diese Anordnung der jeweiligen Passagen kann einerseits eine kompakte Ausgestaltung der jeweiligen Verbindungsansätze erzielt werden und können andererseits bei Bedarf die Verbindungsansätze an ihrer jeweiligen Außenwandung gekühlt werden.

Gemäß noch einer Ausführungsform der Erfindung weist die Abgasleitung außerdem eine Mehrzahl von kühlmittelführungsfreien bevorzugt einwandigen Verbindungshülsen auf, die jeweils eingerichtet sind, eine dichtende Verbindung zwischen jeweils zwei in der Aufreihung zueinander benachbarten Leitungssegmenten der Mehrzahl von Leitungssegmenten herzustellen.

Dadurch, dass die Verbindungshülsen bzw. Verbindungsrohre kühlmittelführungsfrei ausgebildet sind, sind diese mit geringem Aufwand herstellbar und bergen kein Potential für Kühlmittelleckagen.

Gemäß einer weiteren Ausführungsform der Erfindung weist jede der Verbindungshülsen einen Innendurchmesser auf, der auf jeweilige Außendurchmesser der zueinander benachbarten Leitungssegmente an einander zugewandten Längsenden dieser aufgepasst ist, wobei an dem Innendurchmesser bevorzugt elastische Dichtungsmittel, wie z.B. zwei aus hitzebeständigem elastischen Material hergestellte O-Ringe, so vorgesehen sind, dass eine abgasdichte Abdichtung zwischen dem Innendurchmesser der jeweiligen Verbindungshülse und den beiden Außendurchmessern und damit zwischen den jeweiligen Abgaspassagen der zueinander benachbarten Leitungssegmente realisiert ist.

Auf diese Weise können die Abgaspassagen der jeweiligen Leitungssegmente sicher miteinander verbunden werden, wobei durch die Verbindungshülsen und die bevorzugt elastischen Dichtungsmittel Lateralversätze zwischen den einzelnen Leitungssegmenten auf einfache Weise ausgeglichen werden können.

In diesem Zusammenhang ist zu erwähnen, dass im Rahmen der Erfindung die Aufreihung der Leitungssegmente so realisiert sein kann, dass zwischen jeweils einander zugewandten Längsenden dieser Spalte gelassen sind, so dass eine Wärmeausdehnung der jeweiligen Leitungssegmente zugelassen und ausgeglichen werden kann.

Gemäß noch einer weiteren Ausführungsform der Erfindung sind die in die Verbindungshülse eingepassten Außendurchmesser der einander zugewandten Längsenden der beiden zueinander benachbarten Leitungssegmente gleich groß ausgebildet, so dass die Verbindungshülse auf den beiden Außendurchmessern axial verschiebbar ist.

Damit kann die Verbindungshülse in einfacher Weise auf die jeweils gewünschte Position gebracht werden und dann z.B. über lösbare Befestigungsmittel, wie Klebemittel, Schrauben oder Ähnliches, in dieser Position axial fixiert werden.

Gemäß noch einer Ausführungsform der Erfindung weist die Verbindungshülse eine vorbestimmte Länge bzw. Breite in Längsrichtung der Abgasleitung auf, wobei einer der beiden in die Verbindungshülse eingepassten Außendurchmesser der beiden zueinander benachbarten Leitungssegmente eine mindestens die Länge der Verbindungshülse betragende Länge bzw. Breite in Längsrichtung der Abgasleitung aufweist.

Auf diese Weise lässt sich jede Verbindungshülse bei Montage und Demontage der jeweiligen Leitungssegmente auf ein Längsende der Leitungssegmente aufschieben, so dass sie nicht über das Längsende hinaus vorsteht. Dadurch können die Leitungssegmente unabhängig voneinander sowohl in Längsrichtung der Abgasleitung bzw. der Brennkraftmaschine geordnet nacheinander als auch quer zu dieser Längsrichtung in geordneter oder ungeordneter Reihenfolge montiert und demontiert werden. Somit werden die Montage und die Demontage der Leitungssegmente stark vereinfacht.

Schließlich ist noch zu bemerken, dass, wenn die Abgaspassage jedes der Leitungssegmente mit einem mehrwandigen Innenrohr, wie z.B. einem mehrwandigen Flammrohr, realisiert wird, die Abgasenergieverluste reduziert werden können, was insbesondere bei einem an die Abgasleitung angeschlossenen Abgasturbolader vorteilhaft ist.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren detaillierter beschrieben.
- Fig.1: zeigt eine perspektivische Draufsicht auf eine Brennkraftmaschine, die mit erfindungsgemäßen Abgasleitungen versehen ist.
- Fig.2: zeigt eine perspektivische Ansicht von zwei Leitungssegmenten und einer diese verbindenden Verbindungshülse einer erfindungsgemäßen Abgasleitung.
- Fig.3: zeigt eine perspektivische Längsschnittansicht durch die Komponenten der Abgasleitung von Fig.2 hindurch.
- Fig.4: zeigt eine perspektivische Querschnittsansicht durch ein Leitungssegment der erfindungsgemäßen Abgasleitung hindurch.

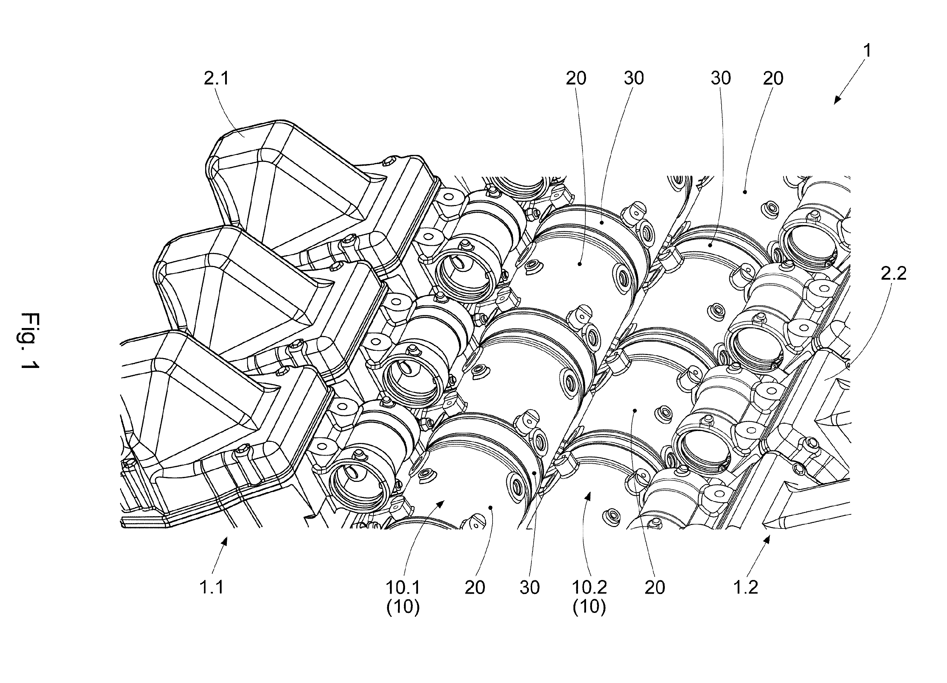

Im Folgenden wird unter Bezugnahme auf die Figuren 1 bis 4 eine Brennkraftmaschine 1 mit zwei Abgasleitungen 10.1, 10.2 gemäß einer Ausführungsform der Erfindung beschrieben werden.

Gemäß der hier beschriebenen Ausführungsform der Erfindung ist die Brennkraftmaschine 1 z.B. als 18- oder 22-zylindrige V-Hubkolben-Brennkraftmaschine, die z.B. mit Diesel oder Brenngas betrieben werden kann, ausgebildet.

Die Brennkraftmaschine 1 weist zwei Zylinderbänke 1.1, 1.2 (A- und B-Zylinderbänke) auf, die jeweils eine gleiche Anzahl von Verbrennungszylindern 2.1 bzw. 2.2 aufweisen.

Jeder der Verbrennungszylinder 2.1 der A-Zylinderbank 1.1 weist einen Abgasauslass (nicht im Detail gezeigt und nicht bezeichnet) auf, wobei die Abgasauslässe der Verbrennungszylinder 2.1 der A-Zylinderbank 1.1 gemeinsam an eine Abgasleitung 10.1 angeschlossen sind.

Jeder der Verbrennungszylinder 2.2 der B-Zylinderbank 1.2 weist einen Abgasauslass (nicht im Detail gezeigt und nicht bezeichnet) auf, wobei die Abgasauslässe der Verbrennungszylinder 2.2 der B-Zylinderbank 1.2 gemeinsam an eine Abgasleitung 10.2 angeschlossen sind.

Da die beiden Abgasleitungen 10.1, 10.2 der Zylinderbänke 1.1, 1.2 im Wesentlichen identisch ausgebildet sind, wird im Folgenden nur eine dieser beschrieben und mit dem allgemeinen Bezugszeichen "10" bezeichnet werden.

Wie aus den Figuren 1 bis 4 ersichtlich, weist die Abgasleitung 10 eine Mehrzahl von bevorzugt zueinander identischen Leitungssegmenten 20, die längs zueinander dichtend aufgereiht sind, und eine Mehrzahl von Verbindungshülsen 30 auf, die jeweils eingerichtet sind, die dichtende Verbindung zwischen jeweils zwei in der Aufreihung von Leitungssegmenten 20 zueinander benachbarten Leitungssegmenten 20 der Mehrzahl von Leitungssegmenten 20 herzustellen.

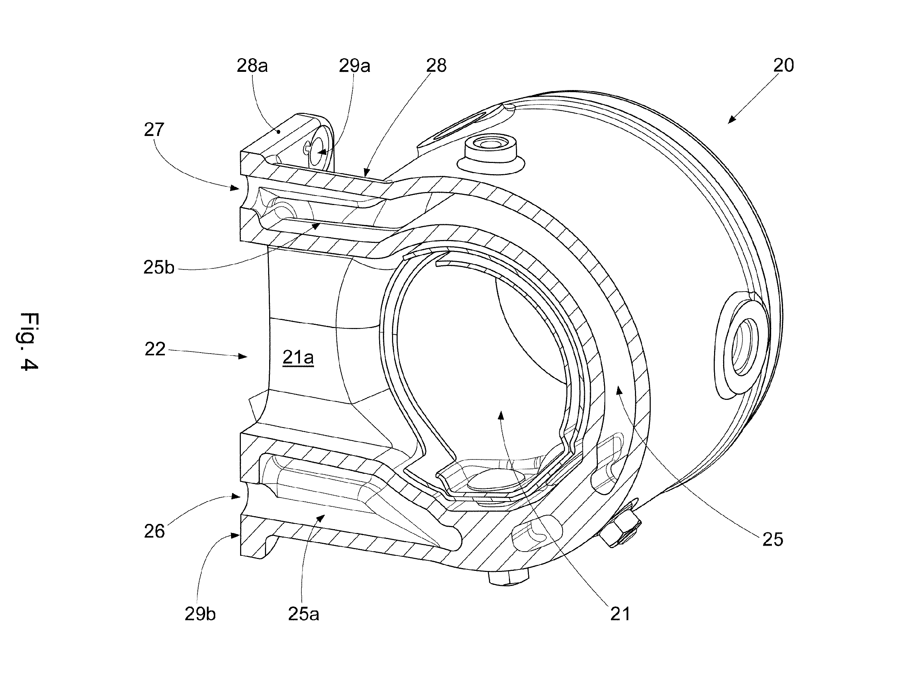

Die Leitungssegmente 20 sind jeweils mehrwandig ausgebildet, so dass sie jeweils eine Abgaspassage 21 und eine die Abgaspassage 21 umgebende Kühlmittelpassage 25 (für z.B. Kühlwasser als Kühlmittel) definieren. Wie aus Fig.4 ersichtlich, ist die Abgaspassage 21 jedes der Leitungssegmente 20 mit einem mehrwandigen Innenrohr (nicht separat bezeichnet), wie z.B. einem mehrwandigen Flammrohr, realisiert, wodurch Abgasenergieverluste reduziert werden können, was insbesondere bei einem an die Abgasleitung 10 angeschlossenen Abgasturbolader vorteilhaft ist. Die Verbindungshülsen 30 sind jeweils als kühlmittelführungsfreie, d.h. nicht von Kühlmittel wie z.B. Kühlwasser durchströmte) einwandige Rohrabschnitte ausgebildet.

Die Leitungssegmente 20 weisen jeweils einen mit der Abgaspassage 21 verbundenen Abgaseinlass 22 auf und sind längs zueinander dichtend so aufgereiht, dass die Abgaspassagen 21 der jeweiligen Leitungssegmente 20 miteinander verbunden und die jeweiligen Abgaseinlässe 22 der Leitungssegmente 20 jeweils zu einem der Abgasauslässe der Brennkraftmaschine 1 ausgerichtet sind.

Jedes der Leitungssegmente 20 weist einen zu einem Kühlsystem (nicht im Detail gezeigt und nicht bezeichnet) der Brennkraftmaschine 1 hin offenen Kühlmitteleinlass 26 und einen zum Kühlsystem hin offenen Kühlmittelauslass 27 für seine Kühlmittelpassage 25 auf. Die Kühlmittelpassagen 25 der jeweiligen Leitungssegmente 20 sind fluidmäßig voneinander getrennt, so dass jedes der Leitungssegmente 20 seinen eigenen geschlossenen Kühlmittelkreislauf aufweist. Jedes der Leitungssegmente 20 weist außerdem einen radial davon vorstehenden mehrwandigen Verbindungsansatz 28 auf.

Bei jedem der Leitungssegmente 20 weist die Abgaspassage 21 eine Abgaseinlasspassage 21 a auf, die in dem Verbindungsansatz 28 des jeweiligen Leitungssegments 20 ausgebildet ist und die an einem Längsende dieser den Abgaseinlass 22 der Abgaspassage 21 des jeweiligen Leitungssegments 20 definiert.

Außerdem weist bei jedem der Leitungssegmente 20 die Kühlmittelpassage 25 eine Kühlmitteleinlasspassage 25a auf, die in dem Verbindungsansatz 28 des jeweiligen Leitungssegments 20 ausgebildet ist und die an einem Längsende dieser den Kühlmitteleinlass 26 der Kühlmittelpassage 25 des jeweiligen Leitungssegments 20 definiert.

Darüber hinaus weist bei jedem der Leitungssegmente 20 die Kühlmittelpassage 25 eine Kühlmittelauslasspassage 25b auf, die in dem Verbindungsansatz 28 des jeweiligen Leitungssegments 20 ausgebildet ist und die an einem Längsende dieser den Kühlmittelauslass 27 der Kühlmittelpassage 25 des jeweiligen Leitungssegments 20 definiert.

Der Verbindungsansatz 28 jedes der Leitungssegmente 20 weist ein freies Längsende auf, an dem ein Verbindungsflansch 28a ausgebildet ist, der zum mechanischen Verbinden mit der Brennkraftmaschine 1, d.h. mit einem Zylinderkopf eines jeweiligen Verbrennungszylinders 2.1 bzw. 2.2 dieser, eine Mehrzahl von Schraubenlöchern 29a und ein flache Montagefläche 29b aufweist.

Wie insbesondere aus Fig.4 ersichtlich, münden der Abgaseinlass 22, der Kühlmitteleinlass 26 und der Kühlmittelauslass 27 eines jeweiligen Leitungssegments 20 über eine Abgaseinlassöffnung, eine Kühlmitteleinlassöffnung bzw. eine Kühlmittelauslassöffnung (alle nicht bezeichnet) in den Verbindungsflansch 28a, so dass der Abgaseinlass 22 des jeweiligen Leitungssegments 20 mit dem Abgasauslass eines dazu korrespondierenden Verbrennungszylinders 2.1 bzw. 2.2 der Brennkraftmaschine 1, der Kühlmitteleinlass 26 des jeweiligen Leitungssegments 20 mit einem dazu korrespondierenden Kühlmittelauslass (nicht im Detail gezeigt und nicht bezeichnet) des Kühlsystems der Brennkraftmaschine 1 und der Kühlmittelauslass 27 des jeweiligen Leitungssegments 20 mit einem dazu korrespondierenden Kühlmitteleinlass (nicht im Detail gezeigt und nicht bezeichnet) des Kühlsystems der Brennkraftmaschine 1 fluidmäßig verbindbar bzw. verbunden sind.

Wie aus Fig.4 ersichtlich, erstreckt sich die Abgaseinlasspassage 21 a im Wesentlichen zentral durch den Verbindungsansatz 28 hindurch, wobei sich die Kühlmitteleinlasspassage 25a und die Kühlmittelauslasspassage 25b radial außerhalb der Abgaseinlasspassage 21 a und einander in Bezug auf die Abgaseinlasspassage 21 a diametral gegenüberliegend durch den Verbindungsansatz 28 hindurch erstrecken.

Im Ergebnis sind der Abgaseinlass 22, der Kühlmitteleinlass 26 und der Kühlmittelauslass 27 von jedem der Leitungssegmente 20 so ausgebildet, dass sie über den Verbindungsansatz 28 eine einzige Verbindungsstelle bzw. Schnittstelle des jeweiligen Leitungssegments 20 mit dem Kühlsystem der Brennkraftmaschine 1 definieren, wobei der Verbindungsansatz 28 sowohl die mechanische Befestigung als auch den Medienanschluss des Leitungssegments 20 an der Brennkraftmaschine 1 in einer einzigen Montageposition zusammenfasst.

Mit anderen Worten sind der Abgaseinlass 22, der Kühlmitteleinlass 26 und der Kühlmittelauslass 27 gemeinsam in ein einziges Verbindungselement (hier den Verbindungsansatz 28) integriert, welcher integral an das jeweilige Leitungssegment 20 angeformt ist.

Jede der Verbindungshülsen 30 weist einen Innendurchmesser (nicht bezeichnet) auf, der auf jeweilige Außendurchmesser 23a, 23b der zueinander benachbarten Leitungssegmente 20, 20 an einander zugewandten Längsenden dieser aufgepasst ist.

An dem Innendurchmesser der jeweiligen Verbindungshülse 30 sind elastische Dichtungsmittel, wie hier z.B. zwei aus hitzebeständigem elastischen Material hergestellte O-Ringe 31, 32 in jeweiligen Ringnuten (nicht bezeichnet) im Innendurchmesser, so vorgesehen, dass eine abgasdichte Abdichtung zwischen dem Innendurchmesser der jeweiligen Verbindungshülse 30 und den beiden Außendurchmessern 23a, 23b und damit zwischen den jeweiligen Abgaspassagen 21, 21 der zueinander benachbarten Leitungssegmente 20, 20 realisiert ist.

Auf diese Weise sind die Abgaspassagen 21 der jeweiligen Leitungssegmente 20 sicher miteinander verbunden, wobei durch die Verbindungshülsen 30 und die elastischen Dichtungsmittel (hier z.B. die beiden O-Ringe 31, 32) Lateralversätze zwischen den einzelnen Leitungssegmenten 20 auf einfache Weise ausgeglichen werden können.

In diesem Zusammenhang ist zu erwähnen, dass im Rahmen der Erfindung die Aufreihung der Leitungssegmente 20 so realisiert sein kann, dass zwischen jeweils einander zugewandten Längsenden dieser Spalte gelassen sind, so dass eine Wärmeausdehnung der jeweiligen Leitungssegmente 20 zugelassen und ausgeglichen werden kann.

Die in die jeweils zugehörige Verbindungshülse 30 eingepassten Außendurchmesser 23a, 23b der einander zugewandten Längsenden der beiden zueinander benachbarten Leitungssegmente 20, 20 sind gleich groß (mit gleicher Abmessung) ausgebildet, so dass die Verbindungshülse 30 auf den beiden Außendurchmessern 23a, 23b axial verschiebbar ist.

Damit kann bei der Montage die Verbindungshülse 30 in einfacher Weise auf die jeweils gewünschte Position gebracht werden und dann z.B. über lösbare Befestigungsmittel, wie Klebemittel, Schrauben oder Ähnliches, in dieser Position axial fixiert werden.

Jede Verbindungshülse 30 weist eine vorbestimmte Länge bzw. Breite in Längsrichtung LR der Abgasleitung 10 auf, wobei einer (hier der am jeweiligen linken Längsende vorgesehene Außendurchmesser 23a) der beiden in die jeweilige Verbindungshülse 30 eingepassten Außendurchmesser 23a, 23b der beiden zueinander benachbarten Leitungssegmente 20, 20 eine mindestens die Länge der Verbindungshülse 30 betragende Länge bzw. Breite in Längsrichtung LR der Abgasleitung 10 aufweist.

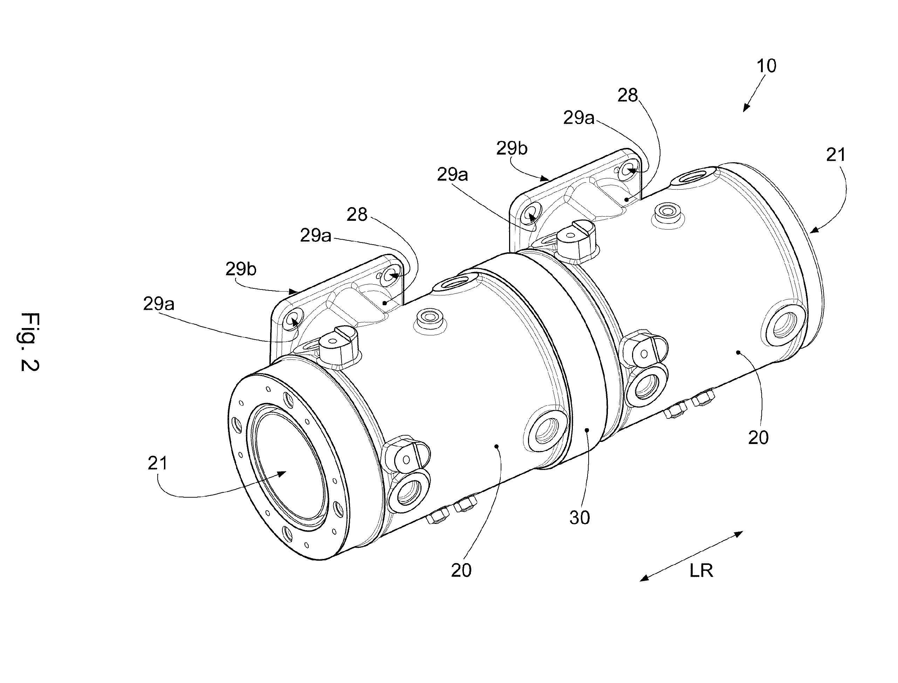

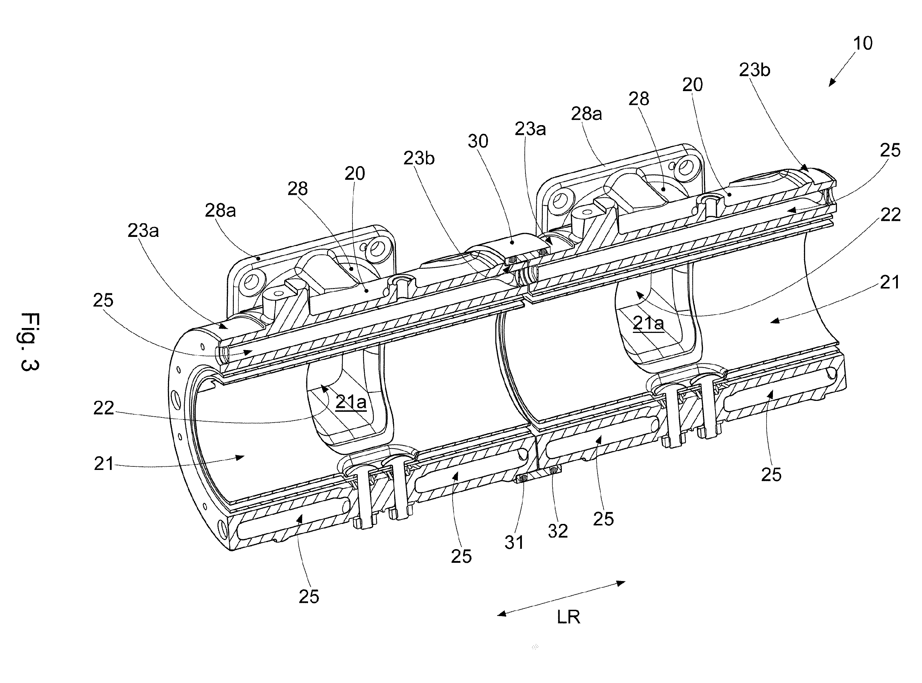

Auf diese Weise lässt sich jede Verbindungshülse 30 bei Montage und Demontage der jeweiligen Leitungssegmente 20 auf ein Längsende (in den Figuren 2 und 3 das jeweilige linke Längsende) der Leitungssegmente 20 aufschieben, so dass die Verbindungshülse 30 nicht über das Längsende hinaus vorsteht. Dadurch können die Leitungssegmente 20 unabhängig voneinander sowohl in Längsrichtung LR der Abgasleitung 10 bzw. der Brennkraftmaschine 1 geordnet nacheinander als auch quer zu dieser Längsrichtung LR in geordneter oder ungeordneter Reihenfolge montiert und demontiert werden.

### Bezugszeichenliste

- 1: Brennkraftmaschine
- 1.1: Zylinderbank (A)
- 1.2: Zylinderbank (B)
- 2.1: Verbrennungszylinder
- 2.2: Verbrennungszylinder
- 10: Abgasleitung (allgemein)
- 10.1: Abgasleitung
- 10.2: Abgasleitung
- 20: Leitungssegment
- 21: Abgaspassage
- 21a: Abgaseinlasspassage
- 22: Abgaseinlass
- 23a: Außendurchmesser
- 23b: Außendurchmesser
- 25: Kühlmittelpassage
- 25a: Kühlmitteleinlasspassage
- 25b: Kühlmittelauslasspassage
- 26: Kühlmitteleinlass
- 27: Kühlmittelauslass
- 28: Verbindungsansatz
- 28a: Verbindungsflansch
- 29a: Schraubenloch
- 29b: Montagefläche
- 30: Verbindungshülse
- 31: O-Ring
- 32: O-Ring
- LR: Längsrichtung

## Patentansprüche

1. Abgasleitung (10) für eine Brennkraftmaschine (1) mit einer Mehrzahl von jeweils einen Abgasauslass aufweisenden Verbrennungszylindern (2.1, 2.2), aufweisend:
eine Mehrzahl von Leitungssegmenten (20), die jeweils mehrwandig ausgebildet sind, so dass sie jeweils eine Abgaspassage (21) und eine die Abgaspassage umgebende Kühlmittelpassage (25) definieren,
wobei die Leitungssegmente (20) jeweils einen Abgaseinlass (22) aufweisen und längs zueinander dichtend aufgereiht sind, so dass die Abgaspassagen (21) der jeweiligen Leitungssegmente (20) miteinander verbunden und die jeweiligen Abgaseinlässe (22) der Leitungssegmente (20) jeweils zu einem der Abgasauslässe der Brennkraftmaschine (1) ausgerichtet sind,
**dadurch gekennzeichnet, dass** jedes der Leitungssegmente (20) einen zu einem Kühlsystem der Brennkraftmaschine (1) hin offenen Kühlmitteleinlass (26) und einen zum Kühlsystem hin offenen Kühlmittelauslass (27) für seine Kühlmittelpassage (25) aufweist und dass die Kühlmittelpassagen (25) der jeweiligen Leitungssegmente (20) voneinander getrennt sind, so dass jedes der Leitungssegmente (20) seinen eigenen geschlossenen Kühlmittelkreislauf aufweist.

2. Abgasleitung (10) gemäß Anspruch 1, wobei der Kühlmitteleinlass (26) und der Kühlmittelauslass (27) von jedem der Leitungssegmente (20) so ausgebildet sind, dass sie eine einzige Verbindungsstelle des jeweiligen Leitungssegments (20) mit dem Kühlsystem der Brennkraftmaschine (1) definieren.

3. Abgasleitung (10) gemäß Anspruch 2, wobei der Abgaseinlass (22) von jedem der Leitungssegmente (20) an dessen Verbindungsstelle mit dem Kühlsystem der Brennkraftmaschine (1) angeordnet ist.

4. Abgasleitung (10) gemäß einem der Ansprüche 1 bis 3, wobei jedes der Leitungssegmente (20) einen radial davon vorstehenden mehrwandigen Verbindungsansatz (28) aufweist, und wobei bei jedem der Leitungssegmente (20):
die Abgaspassage (21) eine Abgaseinlasspassage (21 a) aufweist, die in dem Verbindungsansatz (28) des jeweiligen Leitungssegments (20) ausgebildet ist und die an einem Längsende dieser den Abgaseinlass (22) der Abgaspassage (21) des jeweiligen Leitungssegments (20) definiert,
die Kühlmittelpassage (25) eine Kühlmitteleinlasspassage (25a) aufweist, die in dem Verbindungsansatz (28) des jeweiligen Leitungssegments (20) ausgebildet ist und die an einem Längsende dieser den Kühlmitteleinlass (26) der Kühlmittelpassage (25) des jeweiligen Leitungssegments (20) definiert, und
die Kühlmittelpassage (25) eine Kühlmittelauslasspassage (25b) aufweist, die in dem Verbindungsansatz (28) des jeweiligen Leitungssegments (20) ausgebildet ist und die an einem Längsende dieser den Kühlmittelauslass (27) der Kühlmittelpassage (25) des jeweiligen Leitungssegments (20) definiert.

5. Abgasleitung (10) gemäß Anspruch 4, wobei der Verbindungsansatz (28) jedes der Leitungssegmente (20) ein freies Längsende aufweist, an dem ein Verbindungsflansch (28a) ausgebildet ist, der derart eingerichtet ist, dass er mit der Brennkraftmaschine (1) verbindbar ist, und wobei der Abgaseinlass (22), der Kühlmitteleinlass (26) und der Kühlmittelauslass (27) eines jeweiligen Leitungssegments (20) über eine Abgaseinlassöffnung, eine Kühlmitteleinlassöffnung bzw. eine Kühlmittelauslassöffnung in den Verbindungsflansch (28a) münden, so dass der Abgaseinlass (22) des jeweiligen Leitungssegments (20) mit dem Abgasauslass eines dazu korrespondierenden Verbrennungszylinders (2.1, 2.2) der Brennkraftmaschine (1), der Kühlmitteleinlass (26) des jeweiligen Leitungssegments (20) mit einem dazu korrespondierenden Kühlmittelauslass des Kühlsystems der Brennkraftmaschine (1) und der Kühlmittelauslass (27) des jeweiligen Leitungssegments (20) mit einem dazu korrespondierenden Kühlmitteleinlass des Kühlsystems der Brennkraftmaschine (1) verbindbar sind.

6. Abgasleitung (10) gemäß Anspruch 4 oder 5, wobei sich die Abgaseinlasspassage (21 a) zentral durch den Verbindungsansatz (28) hindurch erstreckt, und wobei sich die Kühlmitteleinlasspassage (25a) und die Kühlmittelauslasspassage (25b) radial außerhalb der Abgaseinlasspassage (21 a) und einander in Bezug auf die Abgaseinlasspassage (21 a) diametral gegenüberliegend durch den Verbindungsansatz (28) hindurch erstrecken.

7. Abgasleitung (10) gemäß einem der Ansprüche 1 bis 6, ferner mit einer Mehrzahl von kühlmittelführungsfreien Verbindungshülsen (30), die jeweils eingerichtet sind, eine dichtende Verbindung zwischen jeweils zwei in der Aufreihung zueinander benachbarten Leitungssegmenten (20, 20) der Mehrzahl von Leitungssegmenten (20) herzustellen.

8. Abgasleitung (10) gemäß Anspruch 7, wobei jede der Verbindungshülsen (30) einen Innendurchmesser aufweist, der auf jeweilige Außendurchmesser (23a, 23b) der zueinander benachbarten Leitungssegmente (20, 20) an einander zugewandten Längsenden dieser aufgepasst ist, und wobei an dem Innendurchmesser Dichtungsmittel (31, 32) so vorgesehen sind, dass eine abgasdichte Abdichtung zwischen dem Innendurchmesser der jeweiligen Verbindungshülse (30) und den beiden Außendurchmessern (23a, 23b) und damit zwischen den jeweiligen Abgaspassagen (21, 21) der zueinander benachbarten Leitungssegmente (20, 20) realisiert ist.

9. Abgasleitung (10) gemäß Anspruch 8, wobei die in die Verbindungshülse (30) eingepassten Außendurchmesser (23a, 23b) der einander zugewandten Längsenden der beiden zueinander benachbarten Leitungssegmente (20, 20) gleich groß ausgebildet sind, so dass die Verbindungshülse (30) auf den beiden Außendurchmessern (23a, 23b) axial verschiebbar ist.

10. Abgasleitung (10) gemäß Anspruch 9, wobei die Verbindungshülse (30) eine vorbestimmte Länge in Längsrichtung (LR) der Abgasleitung (10) aufweist, und wobei einer der beiden in die Verbindungshülse (30) eingepassten Außendurchmesser (23a) der beiden zueinander benachbarten Leitungssegmente (20, 20) eine mindestens die Länge der Verbindungshülse (30) betragende Länge in Längsrichtung (LR) der Abgasleitung (10) aufweist.

## Claims

1. An exhaust line (10) for an internal combustion engine (1) with a plurality of combustion cylinders (2.1, 2.2) each comprising an exhaust outlet, comprising:
a plurality of line segments (20), each of which being of multiple wall design so that they each define an exhaust passage (21) and a coolant passage (25) surrounding the exhaust passage,
wherein the line segments (20) each comprise an exhaust inlet (22) and are sealingly arranged in a row longitudinally to one another, so that the exhaust passages (21) of the respective line segments (20) are connected to one another and the respective exhaust inlets (22) of the line segments (20) are each aligned with one of the exhaust outlets of the internal combustion engine (1),
**characterized in that** each of the line segments (20) comprises a coolant inlet (26) that is open towards a cooling system of the internal combustion engine (1) and a coolant outlet (27) for its coolant passage (25) that is open towards the cooling system and **in that** the coolant passages (25) of the respective line segments (20) are separated from one another so that each of the line segments (20) has its own closed coolant circuit.

2. The exhaust line (10) according to claim 1, wherein the coolant inlet (26) and the coolant outside (27) of each of the line segments (20) are so designed that they define a single connection of the respective line segments (20) to the cooling system of the internal combustion engine (1).

3. The exhaust line (10) according to claim 2, wherein the exhaust inlet (22) of each of the line segments (20) is arranged on its connection to the cooling system of the internal combustion engine (1).

4. The exhaust line (10) according to any one of the claims 1 to 3, wherein each of the line segments (20) comprises a multi-walled connection extension (28) radially projecting from said line segment (20), and wherein with each of the line segments (20) :
the exhaust passage (21) comprises an exhaust inlet passage (21a), which is formed in the connection extension (28) of the respective line segment (20) and which on a longitudinal end of the same defines the exhaust inlet (22) of the exhaust passage (21) of the respective line segment (20),
the coolant passage (25) comprises a coolant inlet passage (25a), which is formed in the connection extension (28) of the respective line segment (20) and which on a longitudinal end of the same defines the coolant inlet (26) of the coolant passage (25) of the respective line segment (20), and
the coolant passage (25) comprises a coolant outlet passage (25b), which is formed in the connection extension (28) of the respective line segment (20) and which on a longitudinal end of the same defines the coolant outlet (27) of the coolant passage (25) of the respective line segment (20).

5. The exhaust line (10) according to claim 4, wherein the connection extension (28) of each of the line segments (20) comprises a free longitudinal end on which a connecting flange (28a) is formed, which is equipped in such a manner that it can be connected to the internal combustion engine (1), and wherein the exhaust inlet (22), the coolant inlet (26) and the coolant outlet (27) of each line segment (20) open into the connecting flange (28a) via an exhaust inlet opening, a coolant inlet opening or a coolant outlet opening, so that the exhaust inlet (22) of the respective line segment (20) can be connected to the exhaust outlet of a combustion cylinder (2.1, 2.2) of the internal combustion engine (1) corresponding to the same, the coolant inlet (26) of the respective line segment (20) can be connected to a coolant outlet of the cooling system of the internal combustion engine (1) corresponding to the same and the coolant outlet (27) of the respective line segment (20) can be connected to a coolant inlet of the cooling system of the internal combustion engine (1) corresponding to the same.

6. The exhaust line (10) according to claim 4 or 5, wherein the exhaust inlet passage (21a) centrally extends through the connection extension (28), and wherein the coolant inlet passage (25a) and the coolant outlet passage (25b) radially outside the exhaust inlet passage (21a) and located diametrically opposite one another with respect to the exhaust inlet passage (21a) extend through the connection extension (28).

7. The exhaust line (10) according to any one of the claims 1 to 6, furthermore with a plurality of coolant supply-free connecting sleeves (30), each of which is equipped in order to establish a sealing connection between two line segments (20, 20) in each case of the plurality of line segments (20) which are adjacent to one another in the row arrangement.

8. The exhaust line (10) according to claim 7, wherein each of the connecting sleeves (30) has an inner diameter which is fitted to respective outer diameters (23a, 23b) of the line segments (20, 20) adjacent to one another on longitudinal ends of these facing one another, and wherein on the inner diameter sealing means (31, 32) are provided so that an exhaust gas-tight seal between the inner diameter of the respective connecting sleeve (30) and the two outer diameters (23a, 23b) and thus between the respective exhaust passages (21, 21) of the line segments (20, 20) adjacent to one another is realised.

9. The exhaust line (10) according to claim 8, wherein the outer diameters (23a, 23b) fitted into the connecting sleeve (30) of the longitudinal ends facing one another of the two line segments (20, 20) adjacent to one another are formed identically in size so that the connecting sleeve (30) is axially moveable on the two outer diameters (23a, 23b).

10. The exhaust line (10) according to claim 9, wherein the connecting sleeve (30) has a predetermined length in longitudinal direction (LR) of the exhaust line (10), and wherein one of the two outer diameters (23a) fitted into the connecting sleeve (30) of the two line segments (20, 20) adjacent to one another, has a length in longitudinal direction (LR) of the exhaust line (10) at least amounting to the length of the connecting sleeve (30).

## Revendications

1. Conduite de gaz d'échappement (10) pour un moteur à combustion interne (1) comportant une pluralité de cylindres de combustion (2.1, 2.2) présentant respectivement un échappement de gaz d'échappement, présentant :
une pluralité de segments de conduite (20), qui sont respectivement conçus avec plusieurs parois, de telle sorte qu'ils définissent respectivement un passage de gaz d'échappement (21) et un passage de liquide de refroidissement (25) entourant un passage de gaz d'échappement,
dans laquelle les segments de conduite (20) présentent respectivement une admission de gaz d'échappement (22) et sont alignés longitudinalement les uns aux autres, de telle sorte que les passages de gaz d'échappement (21) des segments de conduite respectifs (20) sont reliés les uns aux autres et les admissions de gaz d'échappement respectives (22) des segments de conduite (20) sont alignés respectivement sur un des échappements de gaz d'échappement du moteur à combustion interne (1),
**caractérisé en ce que** chacun des segments de conduite (20) présente une admission de liquide de refroidissement (26) ouverte dans la direction du système de refroidissement du moteur à combustion interne (1) et un échappement de liquide de refroidissement (27) ouvert dans la direction du système de refroidissement pour son passage de liquide de refroidissement (25) et **en ce que** les passages de liquide de refroidissement (25) des segments de conduite respectifs (20) sont séparés les uns des autres, de sorte que chacun des segments de conduite (20) présente son propre circuit de liquide de refroidissement fermé.

2. Conduite de gaz d'échappement (10) selon la revendication 1, dans laquelle l'admission de liquide de refroidissement (26) et l'échappement de liquide de refroidissement (27) sont réalisés par chacun des segments de conduite (20), de telle sorte qu'ils définissent un point de liaison unique du segment de conduite respectif (20) avec le système de refroidissement du moteur à combustion interne (1).

3. Conduite de gaz d'échappement (10) selon la revendication 2, dans laquelle l'admission de gaz d'échappement (22) par chaque des segments de conduite (20) est disposée au point de liaison de cette dernière avec le système de refroidissement du moteur à combustion interne (1).

4. Conduite de gaz d'échappement (10) selon une des revendications 1 à 3, dans lequel chacun des segments de conduite (20) présente un embout de liaison (28) à parois multiples dépassant en saillie radialement de ceux-ci, et dans lequel sur chacun des segments de conduite (20) :
le passage de gaz d'échappement (21) présente un passage d'admission de gaz d'échappement (21a), qui est réalisé dans l'embout de liaison (28) du segment de conduite respectif (20) et qui définit à une extrémité longitudinale de celui-ci l'admission de gaz d'échappement (22) du passage de gaz d'échappement (21) du segment de conduite respectif (20),
le passage de liquide de refroidissement (25) présente un passage d'admission de liquide de refroidissement (25a), qui est réalisé dans l'embout de liaison (28) du segment de conduite respectif (20) et qui définit à une extrémité longitudinale de celui-ci l'admission de liquide de refroidissement (26) du passage de liquide de refroidissement (25) du segment de conduite respectif (20) et
le passage de liquide de refroidissement (25) présente un passage d'échappement de liquide de refroidissement (25b), qui est réalisé dans l'embout de liaison (28) du segment de conduite respectif (20) et qui définit à une extrémité longitudinale de celui-ci l'échappement de liquide de refroidissement (27) du passage de liquide de refroidissement (25) du segment de conduite respectif (20).

5. Conduite de gaz d'échappement (10) selon la revendication 4, dans laquelle l'embout de liaison (28) de chacun des segments de liaison (20) présente une extrémité longitudinale libre, à laquelle une bride de liaison (28a) est réalisée, qui est conçue de telle sorte qu'elle puisse être reliée au moteur à combustion interne (1) et dans laquelle l'admission de gaz d'échappement (22), l'admission de liquide de refroidissement (26) et l'échappement de liquide de refroidissement (27) d'un segment de conduite respectif (20) débouchent par l'intermédiaire d'une ouverture d'admission de gaz d'échappement, une ouverture d'admission de liquide de refroidissement respectivement une ouverture d'échappement de liquide de refroidissement dans a bride de liaison (28a), de sorte que l'admission de gaz d'échappement (22) du segment de conduite respectif (20)puissent être reliée avec l'échappement de gaz d'échappement d'un cylindre de combustion correspondant (2.1, 2.2) du moteur à combustion interne (1), l'admission de liquide de refroidissement (26) du segment de conduite respectif (20) peut être reliée avec un échappement de liaison de refroidissement correspondant du système de refroidissement du moteur à combustion interne (1) et l'échappement de liquide de refroidissement (27) du segment de conduite respectif (20) peut être reliée avec une admission de liquide de refroidissement correspondante du système de refroidissement du moteur à combustion interne (1).

6. Conduite de gaz d'échappement (10) selon la revendication 4 ou 5, dans laquelle le passage d'admission de gaz d'échappement (21a) s'étend centralement à travers l'embout de liaison (28) et dans lequel le passage d'admission de liquide de refroidissement (25a) et le passage d'échappement de liquide de refroidissement (25b) s'étendent à travers de l'embout de liaison (28) radialement à l'extérieur du passage d'admission de gaz d'échappement (21a) et diamétralement en vis-à-vis par rapport au passage d'admission de gaz d'échappement (21a).

7. Conduite de gaz d'échappement (10) selon une des revendications 1 à 6, comportant en outre une pluralité de manchons de liaison (30) ne guidant pas le liquide de refroidissement, qui sont respectivement conçus afin d'établir une liaison étanche entre respectivement deux segments de conduite voisins (20, 20) dans l'alignement de la pluralité de segments de conduite (20).

8. Conduite de gaz d'échappement (10) selon la revendication 7, dans laquelle chacun des manchons de liaison (30) présente un diamètre intérieur, qui est adapté au diamètre extérieur respectif (23a, 23b) des segments de conduite voisins (20, 20) aux extrémités longitudinales tournées vers ceux-ci de ces manchons, et dans laquelle sur le diamètre intérieur des moyens d'étanchéité (31, 32) sont prévus de telle sorte qu'une isolation étanche au gaz d'échappement entre le diamètre intérieur du manchon de liaison respectif (30) et les deux diamètres extérieurs (23a, 23b) et ainsi entre les passages de gaz d'échappement respectifs (21, 21) des segments de conduite voisins (20, 20) soit réalisée.

9. Conduite de gaz d'échappement (10) selon la revendication 8, dans laquelle les diamètres extérieurs (23a, 23b) ajustés dans le manchon de liaison (30) des extrémités longitudinales tournées l'une vers l'autre des deux segments de conduite voisins (20, 20) sont conçus de même grandeur, de sorte que le manchon de liaison (30) puisse être coulissé axialement sur les deux diamètres extérieurs (23a, 23b).

10. Conduite de gaz d'échappement (10) selon la revendication 9, dans laquelle le manchon de liaison (30) présente une longueur prédéterminée dans la direction longitudinale (LR) de la conduite de gaz d'échappement (10) et dans laquelle un des deux diamètres extérieurs (23a) ajustés dans le manchon de liaison (30)des deux segments de conduite voisins (20, 20) présente une longueur dans la direction longitudinale (LR) de la conduite de gaz d'échappement (10) correspondant au moins à la longueur du manchon de liaison (30).
